# EUROPÄISCHE PATENTANMELDUNG

(11) **EP 1 251 003 A2**
(43) Veröffentlichungstag der Anmeldung: **23.10.2002**
(21) Anmeldenummer: 02008465.3
(22) Anmeldetag: 15.04.2002
(51) Int. Cl.: B32B 27/36

(54) **Mehrschichtige, transparente, biaxial orientierte Polyesterfolie, Verfahren zu ihre Herstellung und ihre Verwendung**

(30) Priorität: 18.04.2001 DE 10119023
(71) Anmelder: Mitsubishi Polyester Film GmbH, 65203 Wiesbaden (DE)
(72) Erfinder: Janssens, Bart, Dr., Dipl.-Chemiker, 65187 Wiesbaden (DE); Pfeiffer, Herbert, Prof., Dr., 55126 Mainz (DE)
(74) Vertreter: Plate, Jürgen, Dr.

(57) **Zusammenfassung**

Die Erfindung betrifft eine transparente, biaxial orientierte Polyesterfolie mit einer Basisschicht B, die zu mindestens 80 Gew.-% aus einem thermoplastischen Polyester besteht und mindestens einer Deckschicht A. Auf der der Deckschicht A gegenüberliegenden Seite der Folie ist eine weitere polymere Schicht aus einem acrylisch und/oder methacrylisch vernetzten Copolymeren aufgebracht. Die Folie besitzt eine geringe Durchlässigkeit für Luftsauerstoff und zeigt eine sehr gute Haftkraft zwischen den jeweiligen Schichten. Darüber hinaus zeichnet sich die beschichtete Folie durch einen niedrigen Reibungskoeffizienten, durch eine hervorragende Wickelbarkeit und durch ein ausgezeichnetes antistatisches Verhalten aus. Sie eignet sich besonders für Verpackungszwecke, speziell zur Verpackung von Lebens- und Genußmitteln. Die Erfindung betrifft weiterhin ein Verfahren zur Herstellung der Folie und ihre Verwendung

## Beschreibung

Die Erfindung betrifft eine transparente, biaxial orientierte Polyesterfolie mit einer Basisschicht B, die zu mindestens 80 Gew.-% aus einem thermoplastischen Polyester besteht, und mindestens einer Deckschicht A. Auf der der Deckschicht A gegenüberliegenden Seite der Folie ist eine weitere polymere Schicht aus einem acrylisch und/oder methacrylisch vernetzten Copolymeren aufgebracht. Die Folie besitzt eine geringe Durchlässigkeit für Luftsauerstoff und zeigt eine sehr gute Haftkraft zwischen den jeweiligen Schichten. Darüber hinaus zeichnet sich die beschichtete Folie durch einen niedrigen Reibungskoeffizienten, durch eine hervorragende Wickelbarkeit und durch ein ausgezeichnetes antistatisches Verhalten aus. Sie eignet sich besonders für Verpackungszwecke, speziell zur Verpackung von Lebens- und Genußmitteln. Die Erfindung betrifft weiterhin ein Verfahren zur Herstellung der Folie und ihre Verwendung.

In der EP-A-0 878 297 wird eine transparente biaxial orientierte Polyesterfolie mit einer Basisschicht B beschrieben, die zu mindestens 80 Gew.-% aus einem thermoplastischen Polyester und mindestens einer Deckschicht A besteht. Letztere besteht aus einem Gemisch von Polymeren, das mindestens 40 Gew.-% Ethylen-2,6-naphthalat-Einheiten und bis zu 40 Gew.-% Ethylen-terephthalat-Einheiten und/oder bis zu 60 % Einheiten aus cycloaliphatischen oder aromatischen Diolen und/oder Dicarbonsäuren enthält. Die Folie zeichnet sich durch eine niedrige Sauerstoffpermeation aus, die nicht mehr als 80 cm³/(m² bar·d) beträgt. Enthält die Deckschicht A der Folie hohe Mengen an Ethylen-2,6-naphthalat-Einheiten, so neigt die Folie zum Delaminieren zwischen der Deckschicht A und der Basisschicht B. Enthält die Deckschicht A dagegen niedrige Konzentrationen an Ethylen-2,6-naphthalat-Einheiten, so muß die Schichtdicke angehoben werden, um die gewünschte Sauerstoffpermeation zu erreichen.

Bei einer Folie gemäß Beispiel 8 der EP-A-0 878 297 wird in der Deckschicht A reines Polyethylen-2,6-naphthalat (PEN) (entspricht 100 Gew.-% Ethylen-2,6-naphthalat-Einheiten) verwendet. In diesem Fall besteht nur eine geringe Haftung zwischen der Deckschicht A und der Basisschicht B. Die Folie ist für den praktischen Gebrauch (z. B. als Verbundfolie) ungeeignet, weil sich der Verbund schon bei geringer mechanischer Belastung auflöst.

Bei einer Folie gemäß Beispiel 11 der EP-A-0 878 297 enthält die Deckschicht A 60 Gew.-% Ethylen-2,6-naphthalat-Einheiten. Um die gewünschte niedrige Sauerstoffpermeation von kleiner als 80 cm³/(m² bar·d)zu erreichen, muß die Dicke der Deckschicht A auf 3 µm angehoben werden, was wirtschaftlich ungünstig ist (teure Investition und hohe Materialkosten).

Die Folie weist weitere Nachteile auf, die vor allem die Wickelbarkeit und die Verarbeitbarkeit beim Metallisieren betreffen. Folien nach dem Stand der Technik neigen z.B. bei der Metallisierung/der Beschichtung mit keramische Substanzen zur statischen Aufladung und nach der Metallisierung/der Beschichtung mit keramische Substanzen zum Verblocken. Auch die Bedruckbarkeit der Folie ist noch nicht optimal, insbesondere dann, wenn Polyvinylbutyral-(PVB)-Farben benutzt werden.

In der US-A 5,795,528 wird ein koextrudiertes Folienlaminat beschrieben, das alternierende Schichten aus PEN und Polyethylenterephthalat (PET) aufweist. Das Laminat neigt wie die Folie nach EP-A-0 878 297 zum Delaminieren zwischen den einzelnen Schichten aus PEN und PET, da nur eine geringe Haftung besteht. Ein solches Laminat ist damit ebenfalls für die praktische Verwendung nicht geeignet.

Aufgabe der vorliegenden Erfindung ist es, eine transparente, biaxial orientierte Polyesterfolie zur Verfügung zu stellen, die die Nachteile der Folien gemäß dem Stand der Technik nicht mehr aufweisen und die sich insbesondere durch eine verbesserte Haftung zwischen den einzelnen Schichten auszeichnet. Die Folie soll einfach und preiswert herzustellen sein, gute Barriereeigenschaften aufweisen und keine Entsorgungsprobleme bereiten.

Gegenstand der Erfindung ist daher eine transparente biaxial orientierte und beschichtete Polyesterfolie mit einer Basisschicht B, die zu mindestens 80 Gew.- % aus mindestens einem thermoplastischen Polyester besteht, mindestens einer Deckschicht A und einer auf der der Deckschicht A gegenüberliegenden Seite der Folie angeordneten polymeren Schicht, dadurch gekennzeichnet, daß
- die Deckschicht A aus einem Copolymeren oder Gemisch von Polymeren/Copolymeren besteht, das Ethylen-2,6-naphthalat-Einheiten in einem Bereich von 90 bis 98 Gew.-% und bis zu 10 Gew.-% an Ethylen-terephthalat-Einheiten und/oder Einheiten aus cycloaliphatischen oder aromatischen Diolen und/oder Dicarbonsäuren enthält,
- die Dicke der Deckschicht A mehr als 0,7 µm beträgt und in Relation weniger als 25 Gew.-% der Gesamtfolie ausmacht,
- der T_{g}2-Wert der Polyesterfolie über dem T_{g}2-Wert der Basisschicht, aber unterhalb des T_{g}2-Wertes der Deckschicht liegt,
- die auf der Deckschicht A gegenüberliegenden Seite der Folie angeordneten polymeren Schicht aus einem acrylisch und/oder methacrylisch vernetzten Copolymeren besteht.

Die Folie gemäß der Erfindung weist eine niedrige Sauerstoffpermeation von weniger als 85 cm³/(m² bar·d) und eine Mindesthaftung zwischen den einzelnen Schichten A und B von größer/gleich 0,5 N/25 mm auf. Der Reibungskoeffizient (COF) der Folienseite, die der Deckschicht A gegenüberliegt, beträgt nicht mehr als 0,5.

Außerdem ist das Wickelverhalten und die Verarbeitbarkeit der Folie, insbesondere bei der Metallisierung oder bei der Beschichtung mit keramischen Substanzen verbessert. Ferner ist die Folie auf der der Deckschicht A gegenüberliegenden Seite gut bedruckbar, insbesondere mit PVB-Farben.

Die Folie gemäß der Erfindung ist zumindest zweischichtig aufgebaut. Sie besteht dann aus einer Deckschicht A und einer Basisschicht B.

Bevorzugt ist eine Polyesterfolie, bei der das Copolymere oder das Gemisch von Homo- und Copolymeren der Deckschicht A Ethylen-2,6-naphthalat-Einheiten in einem Bereich von 91 bis 97 Gew -%, insbesondere 92 bis 96 Gew -% und bis zu 9 Gew.-%, insbesondere bis zu 8 Gew.-% an Ethylen-terephthalat-Einheiten und/oder Einheiten aus cycloaliphatischen oder aromatischen Diolen und/oder Dicarbonsäuren enthält.

Bevorzugt ist auch eine Polyesterfolie, deren Deckschicht A eine Dicke von mehr als 0,8 µm, insbesondere mehr als 0,9 µm aufweist und in der Relation weniger als 22 Gew.-%, insbesondere weniger als 20 Gew.-% der Gesamtfolie ausmacht.

Geeignete Ausgangsstoffe zur Herstellung der Homo - und Copolymeren sind aliphatische Diole beispielsweise Diethylenglykol, Triethylenglykol, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂-, -O-, -S- oder -SO₂- steht. Daneben sind auch Bisphenole der Formel HO-C₆H₄-C₆H₄-OH gut geeignet.

Als aromatische Dicarbonsäuren sind bevorzugt Benzoldicarbonsäuren, Naphthalindicarbonsäuren (beispielsweise Naphthalin-1,4-oder 1,6-dicarbonsäure), Biphenylx,x'-dicarbonsäuren (insbesondere Biphenyl-4,4'-dicarbonsäure), Diphenylacetylenx,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C₃-C₁₉) Alkandisäuren besonders geeignet, wobei der Alkanteil geradkettig oder verzweigt sein kann.

Erfindungsgemäß ist auf der der Deckschicht A gegenüberliegenden Seite der Folie eine weitere polymere Schicht aufgebracht. Diese weitere Schicht weist auf der fertigen Folie eine Dicke von 5 bis 2000 nm, bevorzugt 10 bis 500 nm, insbesondere 15 bis 200 nm auf. Die Beschichtung wird im allgemeinen nach dem In-line Verfahren aufgebracht, d.h. während des Folienherstellprozesses, zweckmäßigerweise vor der Querstreckung. Bevorzugt ist die Aufbringung mittels des "Reverse gravure-roll coating"-Verfahrens, bei dem sich die Beschichtung äußerst homogen in Schichtdicken bis zu 1000 nm auftragen läßt. Ebenfalls bevorzugt ist die Aufbringung durch das Meyer-Rod-Verfahren, mit dem sich noch größere Beschichtungsstärken erzielen lassen. Die Beschichtung verleiht der Folienoberfläche die gewünschten Funktionen (besseres antistatisches Verhalten, besserer Schlupf, d.h. einen niedrigeren Reibungskoeffizienten (COF), gute Adhäsion zu Druckfarben, insbesondere zu Druckfarben, die auf Basis von PVB aufgebaut sind) und mögliche weitere Funktionen, wie beispielsweise eine verbesserte Kaltsiegelbarkeit.

Die genannten Stoffe werden im allgemeinen als verdünnte Lösung, Emulsion oder Dispersion, vorzugsweise in wäßriger Form auf die entsprechende Folienoberfläche aufgebracht und anschließend das Lösungsmittel verflüchtigt. Werden die Beschichtungen In-line vor der Querstreckung aufgebracht, reicht gewöhnlich die Temperaturbehandlung in der Querstreckung und in der anschließenden Hitzefixierung aus, um das Lösungsmittel zu verflüchtigen und die Beschichtung zu trocknen. Die getrockneten Beschichtungen haben dann die oben angeführten gewünschten Schichtdicken.

Für diese zusätzliche Beschichtung werden Acrylcopolymere eingesetzt. Die bevorzugt verwendeten acrylischen Copolymeren bestehen im wesentlichen aus mindestens 50 Gew.-% eines oder mehrerer polymerisierter acrylischer und/oder methacrylischer Monomerer und 1 bis 15 Gew.-% eines copolymerisierbaren Comonomeren, das in copolymerisiertem Zustand unter Einwirkung von erhöhter Temperatur, gegebenenfalls ohne Zusatz eines gesonderten harzförmigen Venetzungsmittels, zur Ausbildung von intermolekularen Vernetzungen befähigt ist.

Bevorzugt hierfür sind Ester der Methacrylsäure, insbesondere Alkylester, dessen Alkylgruppen bis zu zehn C-Atome enthalten, z.B. die Methyl-, Ethyl-, n-Propyl-, Isopropyl-, n-Butyl-, Isobutyl-, tertiäre Butyl-, Hexyl-, 2-Ethylhexyl-, Heptyl- und n-Octylgruppe. Acrylcopolymere, die von einem niederen Alkylacrylat (C₁ bis C₄) abgeleitet sind, vorzugsweise Ethylacrylat, ergeben z.B. zusammen mit einem niederen Alkylmethacrylat eine besonders gute Haftung zwischen der Polyesterfolie und darauf aufgebrachten reprografischen Beschichtungen und Mattbeschichtungen. Besonders bevorzugt werden Copolymere aus einem Alkylacrylat, z. B. Ethylacrylat oder Butylacrylat, zusammen mit einem Alkylmethacrylat, z. B. Methylmethacrylat, insbesondere zu gleichen molaren Anteilen und in einer Gesamtmenge von 70 bis 95 Gew.-%, eingesetzt. Das Acrylatcomonomere solcher Acryl-/Methacryl-Kombinationen ist vorzugsweise in einem Anteil von 15 bis 65 mol-% anwesend und das Methacrylat-Comonomere vorzugsweise in einem Anteil, der im allgemeinen um 5 bis 20 mol-% größer ist als der Anteil des Acrylatcomonomeren. Das Methacrylat ist vorzugsweise in einem Anteil von 35 bis 85 mol-% in der Kombination enthalten.

Zur Erhöhung der Lösungsmittelbeständigkeit können gegebenenfalls zur Ausbildung von Vernetzungen geeignete Comonomere eingesetzt werden, wie N-Methylolacrylamid, N-Methylolmethacrylamid und die entsprechenden Ether; Epoxidmaterialien wie Glycidylacrylat, Glycidylmethacrylat und Allylglycidylether; Carboxylgruppen enthaltende Monomere wie Crotonsäure, Itaconsäure oder Acrylsäure; Anhydride z.B. Maleinsäureanhydrid; Hydroxylgruppen enthaltende Monomere z.B. Itaconsäureanhydrid; Hydroxylgruppen enthaltende Monomere wie Allylalkohol und Hydroxyethyl- oder Hydroxypropylacrylat oder -methacrylat; Amide wie Acrylamid, Methacrylamid oder Maleinsäureamid und Isocyanate wie Vinylisocyanat oder Allylisocyanat.

Von den oben genannten vernetzenden Comonomeren werden N-Methylolacrylamid und N-Methylolmethacrylamid bevorzugt, und zwar in erster Linie deswegen, weil Copolymerenketten, die eines dieser Monomerer enthalten, unter der Einwirkung von erhöhten Temperaturen zur Kondensation miteinander und somit zur Ausbildung der gewünschten intermolekularen Vernetzungen befähigt sind. Die gegebenenfalls gewünschte Lösungsmittelbeständigkeit der bevorzugten Acrylatbeschichtung kann aber auch durch die Anwesenheit eines fremden Vernetzungsmittels, z.B. eines Melamin- oder Harnstoff-Formaldehyd-Kondensationsproduktes mit weniger als 20 Gew.-% erzielt werden. Wird keine Lösungsmittelbeständigkeit benötigt, so kann auf Vernetzungsmittel verzichtet werden.

Die Art und Weise der oben beschriebenen Beschichtung ist ausführlich in der EPA 0 144 948 angeführt, auf die an dieser Stelle Bezug genommen wird.

Die acrylisch vernetzende Beschichtung wird erfindungsgemäß auf der der Deckschicht A entgegengesetzten Seite der Folie aufgebracht und dient im wesentlichen zur Verbesserung des antistatischen Verhaltens der Folie und zur Verbesserung der Wickelung der Folie. Sie führt im wesentlichen zu einer Erniedrigung des COF-Wertes. Die Beschichtungsrezeptur kann bekannte Zusätze enthalten wie Antistatika, Netzmittel, Tenside, pH-Regulatoren, Antioxidantien, Farbstoffe, Pigmente, Anti-Blockmittel wie kolloidales SiO₂ usw. Normalerweise ist es angebracht, ein Tensid einzuarbeiten, um die Fähigkeit der wäßrigen Beschichtung zur Benetzung der Trägerfolie aus Polyester zu erhöhen.

Ein weiterer Vorteil besteht darin, daß die Herstellungskosten der Folie gemäß der Erfindung nur unwesentlich über denen einer Folie aus Standardpolyesterrohstoffen liegen. Die sonstigen verarbeitungs- und gebrauchsrelevanten Eigenschaften der Folie bleiben im wesentlichen unverändert oder sind sogar verbessert.

Daneben ist bei der Herstellung der Folie gewährleistet, daß das Regenerat in einem Anteil von bis zu 50 Gew.-%, bevorzugt 10 bis 50 Gew.-%, jeweils bezogen auf das Gesamtgewicht der Folie, wiederverwendet werden kann, ohne daß dabei die physikalischen Eigenschaften der Folie negativ beeinflußt werden. Es bereitet daher keine Entsorgungsprobleme.

Die Basisschicht B der Folie besteht zu mindestens 80 Gew.-%, bevorzugt zu mindestens 90 Gew.-% aus mindestens einem thermoplastischen Polyester. Dafür geeignet sind Polyester aus Ethylenglykol und Terephthalsäure (= PET), aus Ethylenglykol und Naphthalin-2,6-dicarbonsäure (= PEN), aus 1,4-Bis-hydroxymethyl-cyclohexan und Terephthalsäure (= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB), vorzugsweise PET und PEN, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen Diolen bzw. Dicarbonsäuren. Geeignete Diol-Comonomere sind beispielsweise Diethylenglykol, Triethylenglykol, aliphatische Glykole der allgemeinen Formel HO-(CH₂)ₙ-OH, wobei n eine ganze Zahl von 3 bis 6 darstellt, verzweigte aliphatische Glykole mit bis zu 6 Kohlenstoff-Atomen, aromatische Diole der allgemeinen Formel HO-C₆H₄-X-C₆H₄-OH, wobei X für -CH₂-, -C(CH₃)₂-, -C(CF₃)₂-, -O-, -S- oder -SO₂- steht, oder Bisphenole der allgemeinen Formel HO-C₆H₄-C₆H₄-OH eingesetzt werden.

Die Dicarbonsäure-Comonomereinheiten leiten sich bevorzugt von Benzoldicarbonsäuren, Naphthalindicarbonsäuren, Biphenyl-x,x'-dicarbonsäuren (insbesondere Biphenyl-4,4'-dicarbonsäure), Cyclohexandicarbonsäuren (insbesondere Cyclohexan-1,4-dicarbonsäure), Diphenylacetylen-x,x'-dicarbonsäuren (insbesondere Diphenylacetylen-4,4'-dicarbonsäure), Stilben-x,x'-dicarbonsäure oder (C₁-C₁₆) Alkandicarbonsäuren ab, wobei der Alkanteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Copolymeren für die Deckschicht A können auf drei verschiedene Weisen hergestellt werden:
1) Bei der gemeinsamen Polykondensation werden Terephthalsäure und Naphthalin-2,6-dicarbonsäure gemeinsam mit Ethylenglykol in einem Reaktionskessel vorgelegt und unter Verwendung der üblichen Katalysatoren und Stabilisatoren zu einem Polyester polykondensiert. Die Terephthalat- und Naphthalat-Einheiten sind dann in dem Polyester statistisch verteilt.
2) Polyethylenterephthalat (PET) und Polyethylen-2,6-naphthalat (PEN) werden im gewünschten Verhältnis gemeinsam aufgeschmolzen und gemischt. Dies kann entweder in einem Reaktionskessel oder vorzugsweise in einem Schmelzkneter (Zweischneckenkneter) oder einem Extruder erfolgen. Sofort nach dem Aufschmelzen beginnen Umesterungsreaktionen zwischen den Polyestern. Zunächst erhält man Blockcopolymere, aber mit zunehmender Reaktionszeit - abhängig von der Temperatur und Mischwirkung des Rührelements - werden die Blöcke kleiner, und bei langer Reaktionszeit erhält man ein statistisches Copolymer. Allerdings ist es nicht nötig und auch nicht unbedingt vorteilhaft zu warten, bis eine statistische Verteilung erreicht ist, denn die gewünschten Eigenschaften werden auch mit einem Blockcopolymer erhalten. Anschließend wird das erhaltene Copolymer aus einer Düse ausgepreßt und granuliert.
3) Polyethylenterephthalat (PET) und Polyethylen-2,6-naphthalat (PEN) werden als Granulat im gewünschten Verhältnis gemischt und die Mischung dem Extruder für die Deckschicht A zugeführt. Hier findet die Umesterung zum Copolymer direkt während der Herstellung der Folie statt. Dieses Verfahren hat den Vorteil, daß es sehr wirtschaftlich ist. In der Regel werden mit diesem Verfahren Blockcopolymere erhalten, wobei die Blocklänge von der Extrusionstemperatur, der Mischwirkung des Extruders und der Verweilzeit in der Schmelze abhängt.

In einer bevorzugten Ausführungsform der Erfindung sind 0,1 bis 20,0 Gew.-% der Polymere der Basisschicht B identisch mit denen der Deckschicht A. Diese werden der Basisschicht B entweder direkt bei der Extrusion beigemischt oder sind automatisch in der Folie durch Regeneratzugabe enthalten. Der Anteil dieser Copolymere in der Basisschicht ist so gewählt, daß die Basisschicht kristallinen Charakter aufweist.

In einer weiteren vorteilhaften Ausführungsform umfaßt die Folie auf der der Deckschicht A abgewandten Seite eine weitere Deckschicht C aus PET, die Pigmente enthält. Die Eingangs beschriebene acrylisch vernetzende Schicht ist in diesem Fall auf die Deckschicht C aufgebracht.

Die Folie gemäß der Erfindung besitzt eine hohe Sauerstoffbarriere und die gewünschte gute Haftung zwischen den einzelnen Schichten der Folie.

Werden für die Deckschicht A Polymere/Copolymere verwendet, die weniger als 90 Gew.-% Ethylen-2,6-naphthalat-Einheiten und mehr als 10 Gew.-% Ethylen-terephthalat-Einheiten enthalten, bei einer Dicke der Deckschicht A von weniger als 0,7 µm, dann ist die Folie zwar weniger durchlässig für Sauerstoff als eine Standardpolyesterfolie (die zu 100 Gew.-% aus PET besteht), die Durchlässigkeit ist jedoch noch zu hoch.

Werden für die Deckschicht A Polymere/Copolymere verwendet, die mehr als 98 Gew.-% Ethylen-2,6-naphthalat-Einheiten enthalten (z.B. reines PEN), dann ist die Adhäsion zwischen der Deckschicht A und der Basisschicht B nicht mehr ausreichend. Die Folie neigt bei mechanischer Beanspruchung zum Delaminieren, was unerwünscht ist und zu einer nicht verwendbaren Folie führt.

Weiterhin zeichnet sich die Folie gemäß der Erfindung dadurch aus, daß die Glasübergangstemperatur T_{g} des Copolymers bzw. der Mischung aus Homo- und Copolymeren der Deckschicht A im Vergleich zum Stand der Technik höher liegt als die Glasübergangstemperatur T_{g} der Polymeren für die Basisschicht B. Die Glasübergangstemperatur T_{g} der eingesetzten Copolymeren für die Deckschicht A liegt vorzugsweise im Bereich von 90 bis 120 °C. Bei der Bestimmung der Glasübergangstemperaturen T_{g} mittels Differential Scanning Calorimetry (DSC) können die Übergänge der einzelnen Schichten bei einer Mehrschichtfolie nicht unterschieden werden.

Glasübergänge, die beim ersten Aufheizvorgang an biaxial orientierten, wärmefixierten Folien bestimmt werden (im folgenden T_{g}1 genannt), sind wegen der Kristallinität sowie der molekularen Spannungen im amorphen Anteil der Proben in ihrem Ausmaß relativ gering ausgebildet, über einen breiten Temperaturbereich verteilt und zu höheren Temperaturen verschoben. Vor allem auf Grund von Orientierungseffekten eignen sie sich nicht zur Charakterisierung eines Polymers als solchem. Die Auflösung von DSC-Messgeräten reicht oft nicht aus, um die wegen der Orientierung und Kristallinität kleinen und "verschmierten" Glasstufen im ersten Aufheizvorgang (T_{g}1) der einzelnen Schichten der Folie gemäß der Erfindung überhaupt zu erfassen.

Werden die Proben aber aufgeschmolzen und dann schnell wieder unter ihre Glasübergangstemperatur T_{g} abgekühlt (abgeschreckt), werden die Orientierungseffekte eliminiert. Beim erneuten Aufheizen werden dann Glasübergänge (hier als T_{g}2 bezeichnet) gemessen, die eine höhere Intensität haben und deren Lage auf der Temperaturskala für die jeweiligen Polymeren als solche charakteristisch ist. Die Glasübergänge der Polyester der einzelnen Schichten lassen sich allerdings auch so nicht unterscheiden, weil sich die Schichten beim Aufschmelzen vermischen und die darin enthaltenen Polyester untereinander Umesterungsreaktionen eingehen. Es ist jedoch völlig ausreichend, die Temperatur T_{g}2 der gesamten coextrudierten Folien mit der Temperatur T_{g}2 des für die Basisschicht B verwendeten Polyesters zu vergleichen.

In bekannten Folien liegt der T_{g}2-Wert des Polyesters für die Basisschicht höher als der T_{g}2-Wert der coextrudierten Folie, während der T_{g}2-Wert des Polyesters für die Deckschicht niedriger liegt als der T_{g}2-Wert des Polyesters für die Basisschicht und auch niedriger als der T_{g}2-Wert der coextrudierten Folie. In der Folie gemäß der Erfindung ist dies gerade umgekehrt. Hier liegt der T_{g}2-Wert der coextrudierten Folie höher als der T_{g}2-Wert des Polyesters für die Basisschicht B, aber unterhalb des T_{g}2-Wertes des Polyesters für die Deckschicht A.

Die Basisschicht B und die Deckschicht(en) können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Additive können auch Mischungen von zwei oder mehr verschiedenen Antiblockmitteln oder Mischungen von Antiblockmitteln gleicher Zusammensetzung, aber unterschiedlicher Partikelgröße gewählt werden. Die Partikeln können den einzelnen Schichten in den üblichen Konzentrationen, z.B. als glykolische Dispersion während der Polykondensation oder über Masterbatche bei der Extrusion zugegeben werden. Als vorteilhaft haben sich Pigmentkonzentrationen von 0,0001 bis 5 Gew.-% erwiesen. Eine detaillierte Beschreibung der Antiblockmittel findet sich beispielsweise in der EP-A 0 602 964, auf die hier Bezug genommen wird.

Zu besonders guten Werten für die Sauerstoffbarriere gelangt man, wenn die Deckschicht A metallisiert oder keramisch beschichtet wird.

Die Folie gemäß der Erfindung kann vorzugsweise noch eine zweite Deckschicht C enthalten. Aufbau, Dicke und chemische Zusammensetzung der zweiten Deckschicht C können unabhängig von der bereits vorhandenen Deckschicht A gewählt werden, wobei die zweite Deckschicht C ebenfalls die bereits genannten Polymeren oder Polymermischungen enthalten kann, welche aber nicht notwendig mit den Polymeren für die erste Deckschicht A identisch sein müssen. Die zweite Deckschicht C kann auch andere gängige Deckschichtpolymeren enthalten.

Zwischen der Basisschicht B und der Deckschicht A kann sich auch eine Zwischenschicht Z befinden. Die Dicke der Zwischenschicht Z ist im allgemeinen größer als 0,1 µm und liegt vorzugsweise im Bereich von 0,2 bis 20,0 µm, insbesondere 0,3 bis 10,0 µm.

Die Dicke der Deckschicht C ist im allgemeinen größer als 0,1 µm und liegt vorzugsweise im Bereich von 0,2 bis 5,0 µm, insbesondere 0,2 bis 4,0 µm, wobei die Deckschichten gleich oder verschieden dick sein können.

Die Gesamtdicke der Folie kann innerhalb weiter Grenzen variieren und richtet sich nach dem beabsichtigten Verwendungszweck. Sie beträgt im allgemeinen 6,0 bis 100,0 µm, vorzugsweise 8,0 bis 50,0 µm, insbesondere 10,0 bis 30,0 µm, wobei die Basisschicht B einen Anteil von vorzugsweise 40 bis 95 % an der Gesamtdicke hat.

Gegenstand der vorliegenden Erfindung ist auch ein Verfahren zur Herstellung dieser Folie. Es umfaßt
1) Herstellen einer mehrschichtigen Folie aus einer Basisschicht B und Deckschicht(en) A und gegebenenfalls C durch Coextrusion;
2) Beschichten der Folie mit der acrylisch vernetzenden Schicht (vorzugsweise zwischen dem ersten und dem zweiten Streckschritt)
3) biaxiales Strecken der Folie und
4) Thermofixieren der gestreckten Folie.

Zur Herstellung der Deckschicht A werden zweckmäßig Granulate aus PET und PEN im gewünschten Mischungsverhältnis direkt dem Extruder zugeführt. Die beiden Materialien lassen sich bei etwa 300 °C aufschmelzen und extrudieren.

Unter diesen Bedingungen können im Extruder Umesterungsreaktionen ablaufen, bei denen sich Copolymere aus den jeweiligen Homopolymeren bilden. Die Polymere für die Basisschicht B werden zweckmäßig über einen weiteren Extruder zugeführt.

Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Streckung wird im allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) gestreckt. Dies führt zu einer Orientierung der Molekülketten innerhalb des Polyesters. Das Strecken in Längsrichtung läßt sich mit Hilfe zweier entsprechend dem angestrebten Streckverhältnis verschieden schnell rotierender Walzen durchführen. Zum Querstrecken benutzt man allgemein einen entsprechenden Kluppenrahmen.

Die Temperatur, bei der die Streckung durchgeführt wird, kann in einem relativ großen Bereich variieren und richtet sich nach den gewünschten Eigenschaften der Folie. Im allgemeinen wird die Streckung in Längsrichtung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie über eine Zeitdauer von etwa 0,1 bis 10,0 Sekunden bei einer Temperatur von 150 bis 250 °C gehalten. Anschließend wird die Folie in üblicher Weise aufgewickelt.

Von großem Vorteil bei diesem Verfahren ist, daß dem Extruder Granulate zu gegeben werden können, die die Maschine nicht verkleben.

Die Folie gemäß der Erfindung zeichnet sich durch hervorragende Barriereeigenschaften, insbesondere gegenüber Sauerstoff aus. Sie eignet sich daher hervorragend als Verpackungsmaterial, vorzugsweise zum Verpacken von Nahrungs- und Genußmitteln.

Überraschenderweise zeigt die mit den zuvor beschriebenen acrylischen Polymeren beschichtete Folie eine sehrgute Handhabung, sehr gute Wickeleigenschaften und ein sehr gutes Verarbeitungsverhalten. Bei der Verarbeitung der Folie z.B. zu Folienlaminaten ist gewährleistet, daß die einzelnen Schichten des Laminates zusammen haften bleiben und nicht delaminieren. So ist sie z.B. insbesondere für die Verarbeitung auf schnelllaufenden Maschinen geeignet.

Außerdem konnte der Glanz und die Trübung der Folie gegenüber Folien nach dem Stand der Technik verbessert werden. Tabelle 1 faßt die wichtigsten Folieneigenschaften zusammen:

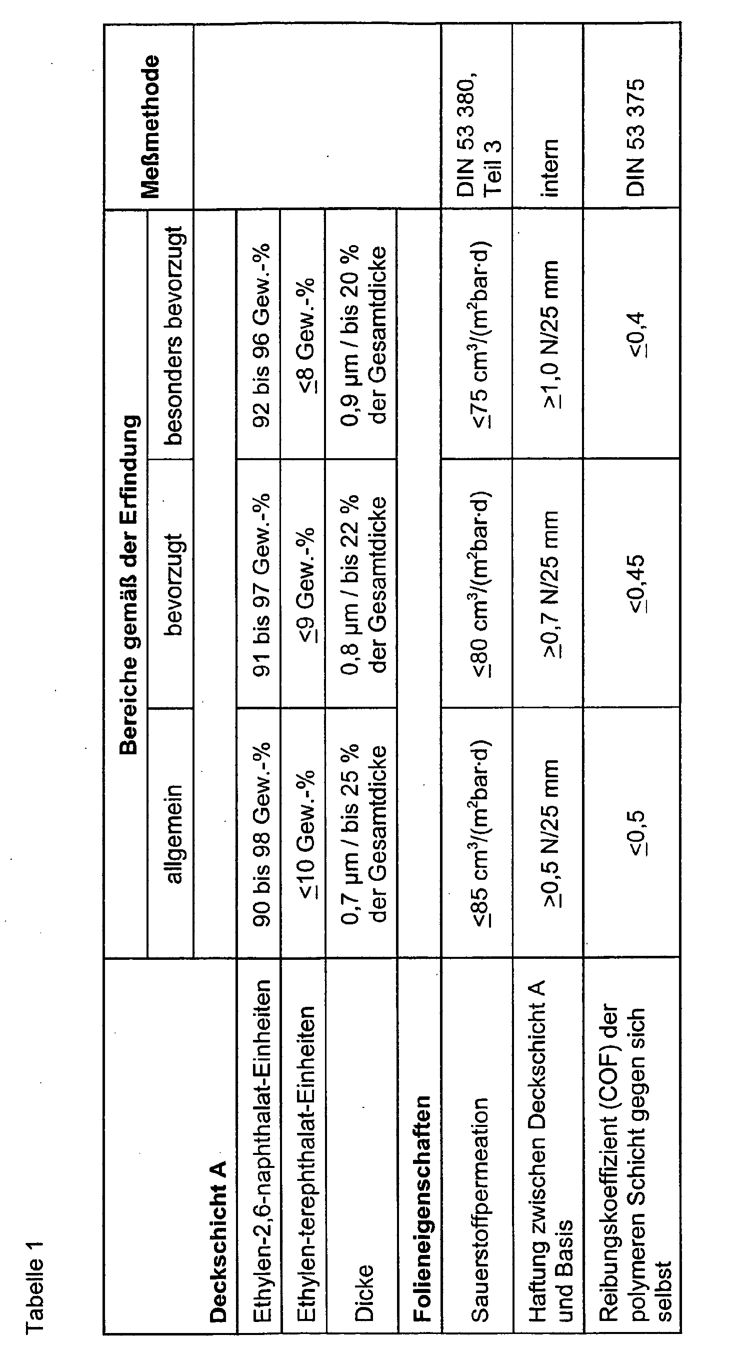

Zur Charakterisierung der Rohstoffe und der Folien wurden die folgenden Methoden benutzt:

### Sauerstoffdurchlässigkeit

Die Messung der Sauerstoffbarriere erfolgt mit einem OX-TRAN 2/20 der Fa. Mocon Modern Controls (USA) entsprechend DIN 53 380, Teil 3.

### SV-Wert (standard viscosity)

Die Standardviskosität SV (DCE) wird, angelehnt an DIN 53726, in Dichloressigsäure gemessen. Die intrinsische Viskosität (IV) berechnet sich wie folgt aus der Standardviskosität IV (DCE) = 6,907 • 10⁻⁴ SV (DCE) + 0,063096.

### Reibung

Die Reibung wird nach DIN 53 375 bestimmt. Die Gleitreibungszahl wird 14 Tage nach der Produktion gemessen.

### Oberflächenspannung

Die Oberflächenspannung wird mit der sogenannten Tintenmethode (DIN 53 364) bestimmt.

### Trübung

Die Trübung der Folie wird nach ASTM-D 1003-52 gemessen. Die Trübungsmessung nach Hölz wird in Anlehnung an ASTM-D 1003-52 bestimmt, wobei jedoch zurAusnutzung des optimalen Meßbereichs an vier übereinander liegenden Folienlagen gemessen und anstelle einer 4°-Lochblende eine 1°-Spaltblende eingesetzt wird.

### Glanz

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

### Glasübergangstemperaturen T_{g}

Die Glasübergangstemperaturen T_{g}1 und T_{g}2 werden anhand von Folienproben mit Hilfe der DSC (Differential Scanning Calorimetry) bestimmt. Verwendet wird ein DSC 1090 der Fa. DuPont. Die Aufheizgeschwindigkeit beträgt 20 K/min und die Einwaage ca. 12 mg. Im ersten Aufheizvorgang wird der Glasübergang T_{g}1 ermittelt. Die Proben zeigen vielfach eine Enthalpierelaxation (ein Peak) zu Beginn des stufenförmigen Glasübergangs. Als T_{g}1 wird die Temperatur genommen, bei der die stufenförmige Veränderung der Wärmekapazität - unabhängig von der peakförmigen Enthalpierelaxation - ihre halbe Höhe im ersten Aufheizvorgang erreicht. In allen Fällen wird nur eine einzige Glasübergangsstufe im Thermogramm beim ersten Aufheizen beobachtet. Um die thermische Vorgeschichte zu eliminieren, werden die Proben nach dem Aufheizen 5 Minuten bei 300°C gehalten und dann anschließend mit flüssigem Stickstoff abgeschreckt. Aus dem Thermogramm für das zweite Aufheizen wird die Temperatur für den Glasübergang T_{g}2 als die Temperatur bei halber Stufenhöhe entnommen.

### Haftung zwischen den Schichten

Das Folienmuster (300 mm längs * 180 mm quer) gemäß der vorliegenden Erfindung wird vor dem Verkleben auf einen glatten Karton (200 mm längs*180 mm quer; ca. 400 g/m², gebleicht, Außenlagen gestrichen) gelegt, die überstehenden Folienenden sind auf die Rückseite umzuschlagen und mit Klebeband zu fixieren.

Die Verklebung der Folie gemäß der vorliegenden Erfindung mit einer Standardpolyesterfolie von 12 µm Dicke (z.B. Melinex 800) erfolgt mit einem Rakelgerät und Rakelstab Nr. 3 der Fa. Erichsen, wobei ca. 1,5 ml Klebstoff (Novacote NC 275 + CA 12; Mischungsverhältnis: 4/1+ 7 Teile Ethylacetat) auf die Deckschicht A der Folie aufgetragen wird. Nach dem Auslüften des Lösemittels wird die Standardpolyesterfolie mit einer Metallrolle (Breite 200 mm, Durchmesser 90 mm, Masse 10 kg, nach DIN EN 20 535) auf die Deckschicht A der Folie aufkaschiert. Die Parameter der Kaschierung sind:

| | |
|---|---|
| Klebstoffmenge | 5 +/- 1 g/m² |
| Lüften nach Auftrag des Klebers | 4 min +/- 15 s |
| Rakelstärke (Erichsen) | 3 |
| Geschwindigkeitsstufe des Rakels | ca. 133 mm/s |
| Aushärtzeit des Verbundes | 2 h bei 70 °C in einem Umluftofen |

Mit einem 25 +/- 1 mm Streifenschneider werden ca. 100 mm lange Proben entnommen. Hierbei sind ca. 50 mm Verbund und 50 mm unverklebte Einzellagen zum Fixieren/Einspannen des Prüfkörpers notwendig. Die Prüflinge sind mittels doppelseitigem Klebeband mit der Rückseite der Folie (Basisschicht B oder Deckschicht C) vollflächig auf einem Trägerblech zu fixieren. Die Platte mit dem aufgeklebten Verbund ist in die untere Spannbacke der Zugprüfmaschine einzuspannen. Der Klemmabstand beträgt 100 mm. Das nicht kaschierte Ende der Standard-Polyesterfolie ist so in die obere Spannbacke der Zugprüfmaschine (Fa. Zwick) einzuspannen, daß sich ein Schälwinkel von 180 ° ergibt. Angegeben wird die mittlere Schälkraft in N/25 mm, gerundet auf eine Stelle nach dem Komma.

| | |
|---|---|
| Probenbreite | 25 mm |
| Vorkraft | 0,1 N |
| Messlänge | 25 mm |
| Abzugsgeschwindigkeit bis Vorkraft | 25 mm/min |
| Vorweg | 5 mm |
| Prüfweg | 40 mm |
| Empfindlichkeit | 0,01 N |
| Abzugsgeschwindigkeit | 100 mm/min |

Das Meßergebnis für die Schälkraft ist gleichzusetzen mit der minimalen Haftkraft zwischen den Schichten, da die Haftkraft zwischen dem Kleber und der Standardfolie deutlich größer ist. Eine Schichtablösung der Deckschicht A von der Basisschicht B der Folie gemäß der Erfindung kann beispielsweise mittels UV-Lampe nachgewiesen werden.

### Beispiele

In den nachstehenden Beispielen und den Vergleichsbeispielen wurden folgende Produkte eingesetzt:
Polyethylenterephthalat (PET), Typ 4020, (Fa: KoSa, Deutschland), SV - Wert 800, Polyethylen-2,6-naphthalat (PEN) ®Polyclear P 100, (Prepolymer der Fa. KoSa, Deutschland), SV - Wert 600,
Kieselsäurepartikel ®Sylobloc 44 H (Fa. Grace, Deutschland), mittlere Teilchengröße (mittl.Tgr.) 2,5 µm,
®Aerosil TT (Fa. Degussa, Deutschland), mittlere Teilchengröße (mittl.Tgr.) 0,4 µm

Die Zusammensetzung der Deckschicht A der gemäß den Beispielen 1 und 2 und den Vergleichsbeispielen VB1 bis VB3 hergestellten Folien ist in Tabelle 2 aufgeführt.

Die Eigenschaften der gemäß den Beispielen 1 und 2 und den Vergleichsbeispielen VB1 bis VB3 hergestellten Folien sind in Tabelle 3 zusammengestellt.

### Beispiel 1

| | |
|---|---|
| Basisschicht B | 100 Gew.- % PET |
| Deckschicht A | 97 Gew.- % PEN und 3 Gew.- % PET |
| Deckschicht C | 80 Gew.- % PET und 20 Gew.- % Masterbatch aus 99,0 Gew.- % PET und 1,0 Gew.- % Kieselsäurepartikel (50 % mittl. Tgr. 2,5 µm, 50 % mittl.Tgr. 0,4 µm) |

Chips aus den Materialien für die einzelnen Schichten wurden bei einer Temperatur von 160 °C auf eine Restfeuchte von weniger als 100 ppm getrocknet und den Extrudern für die einzelnen Schichten zugeführt, wobei etwa vorhandene Fremdkörper oder Verunreinigungen aus den Polymerschmelzen bei 300°C vorder Extrusion abfiltriert wurden. Die Schmelzen wurden dann in einer Mehrschichtdüse zu flachen Schmelzefilmen, bei einer Verweilzeit der Polymeren in der Extrusion von 5 Minuten, coextrudiert, wobei aus den Polymeren für die Deckschicht A ein Copolymer entstand und mit Hilfe einer Kühlwalze abgezogen und verfestigt. Die gebildete dreischichtige ABC Folie wurde anschließend längsverstreckt und auf die Deckschicht C der Folie, die zuvor auf dieser Seite coronabehandelt wurde, eine acrylisch vernetzende Beschichtung nach dem Reversgravurverfahren aufgebracht. Die hierfür verwendete Dispersion bestand aus einer 4,5 Gew.-% igen Lösung eines Latex aus einem Copolymeren aus 60 Gew.-% Methylmethacrylat, 35 Gew.-% Ethylacrylat und 5 Gew.-% N-Methylolacrylamid sowie einem Tensid. Das Trockengewicht der Beschichtung (bezogen auf die biaxial orientierte Folie) betrug ca. 0,035 g/m².

Die so längsgestreckte und beschichtete Folie wurde in Querrichtung zu einer transparenten dreischichtigen Folie mit ABC-Aufbau und einer Gesamtdicke von 12 µm gestreckt. Die Deckschicht A hatte eine Dicke von 1,2 µm und die Deckschicht C eine Dicke von 1,0 µm.

Die einzelnen Verfahrensschritte waren:

| | | | |
|---|---|---|---|
| Extrusion | Temperaturen | Deckschicht A | 300 °C |
| | | Deckschicht B | 300 °C |
| | | Deckschicht C | 300 °C |
| Längsstreckung | Temperatur | | 85-135 °C |
| | Längsstreckverhältnis | | 4,5 : 1 |
| Querstreckung | Temperatur | | 85-135 °C |
| | Querstreckverhältnis | | 4,0 : 1 |
| Fixierung | Temperatur | | 230 °C |

Neben den in der Tabelle 3 aufgeführten Eigenschaften der erhaltenen Folie zeichnet sie sich durch ein ausgezeichnetes antistatisches Verhalten aus.

### Beispiel 2

Beispiel 1 wurde wiederholt mit dem Unterschied, daß sich die Deckschicht A aus 95 Gew.-% PEN und 5 Gew.-% PET zusammensetzte. Wie in Beispiel 1 wurde durch Coextrusion eine dreischichtige ABC - Folie mit einer Gesamtdicke von 12 µm hergestellt. Die Deckschicht A hatte eine Dicke von 1,3 um und die Deckschicht C eine Dicke von 1,0 µm. Die Beschichtung wurde wie in Beispiel 1 durchgeführt.

### Vergleichsbeispiel 1

Es wurde eine ABC - Folie entsprechend Beispiel 8 der EP-A-0 878 297 hergestellt. Die Folie hatte die geforderte Sauerstoffbarriere, die Haftung zwischen den Schichten A und B war jedoch äußerst gering (s. Tab. 3).

### Vergleichsbeispiel 2

Es wurde eine Folie in Anlehnung an die US-A 5,795,528 hergestellt, die jedoch nur aus 2 Schichten A und B, die jeweils aus 100 % PEN und 100 % PET bestanden.

Die Folie hatte die geforderte Sauerstoffbarriere, die Haftung zwischen den Schichten A und B war jedoch äußerst gering (s. Tab. 3).

### Vergleichsbeispiel 3

Es wurde eine Folie entsprechend Beispiel 1 hergestellt, jedoch ohne die Beschichtung auf der Deckschicht C. Die Folie hat nicht den gewünschten, niedrigen Reibungskoeffizienten, und dadurch bedingt nicht die gewünschte gute Wickelbarkeit und nicht das gewünschte gute antistatisches Verhalten(s Tab. 3).

**Tabelle 2**

| Beispiel | B1 | B2 | VB1 | VB2 | VB3 |
|---|---|---|---|---|---|
| Ethylen-2,6-naphthalat-Einheiten in der Deckschicht A (in Gew.-%) | 97 | 95 | 100 | 100 | 97 |
| Ethylenterephthalat-Einheiten in der Deckschicht A (in Gew.-%) | 3 | 5 | 0 | 0 | 3 |

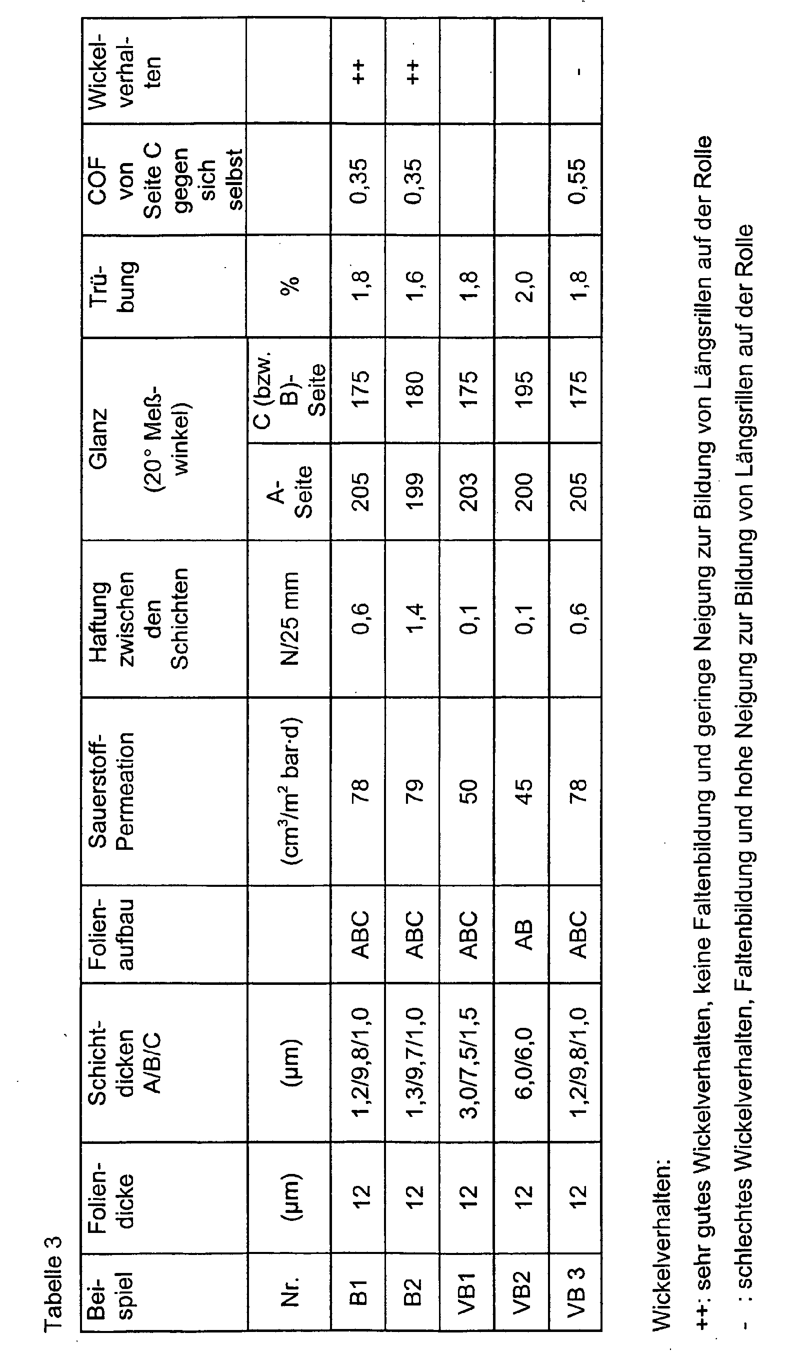

## Patentansprüche

1. Transparente, biaxial orientierte Polyesterfolie mit einer Basisschicht B, die zu mindestens 80 Gew.-% aus mindestens einem thermoplastischen Polyester besteht und mindestens einer Deckschicht A und einer auf der der Deckschicht A gegenüberliegenden Seite der Folie angeordneten polymeren Schicht, **dadurch gekennzeichnet, daß**
- die Deckschicht A ein Copolymer oder ein Gemisch von Homo- und Copolymeren enthält, das Ethylen-2,6-naphthalat-Einheiten in einem Bereich von 90 bis 98 Gew.-% und bis zu 10 Gew.-% an Ethylen-terephthalat-Einheiten und/oder Einheiten aus cycloaliphatischen oder aromatischen Diolen und/oder Dicarbonsäuren enthält;
- die Dicke der Deckschicht A mehr als 0,7 µm beträgt und weniger als 25 Gew.-% der Gesamtfolie ausmacht und
- der T_{g}2-Wert der Polyesterfolie über dem T_{g}2-Wert des Polyesters für die Basisschicht B, aber unterhalb des T_{g}2-Wertes des Polyesters für die Deckschicht A liegt,
- die auf der Deckschicht A gegenüberliegenden Seite der Folie angeordneten polymeren Schicht aus einem acrylisch und/oder methacrylisch vernetzten Copolymeren besteht.

2. Folie nach Anspruch 1, **dadurch gekennzeichnet, daß** das Copolymere oder das Gemisch von Homo- und Copolymeren in der Deckschicht A vorzugsweise Ethylen-2,6-naphthalat-Einheiten in einem Bereich von 91 bis 97 Gew.-%, insbesondere von 92 bis 96 Gew -%. enthält, und die Deckschicht A eine Dicke von mehr als 0,8 µm, vorzugsweise mehr als 0,9 µm besitzt und weniger als 22 Gew.-%, vorzugsweise weniger als 20 Gew.-% der Gesamtfolie ausmacht.

3. Folie nach Anspruch 1 oder 2, **dadurch gekennzeichnet , daß** sie eine Sauerstoffpermeation von weniger als 85 cm³/(m² bar·d), vorzugsweise von weniger als 80 cm³/(m² bar·d), insbesondere weniger als 75 cm³/(m² bar·d), aufweist.

4. Folie nach einem oder mehreren der Ansprüche 1 bis 3, **dadurch gekennzeichnet, daß** die Haftung zwischen den einzelnen Schichten größer als 0,5 N/25 mm, vorzugsweise größer als 0,7 N/25 mm und insbesondere größer als 1,0 N/25 mm beträgt.

5. Folie nach einem oder mehreren der Ansprüche 1 bis 4, **dadurch gekennzeichnet, daß** sie zusätzlich eine Zwischenschicht Z mit einer Dicke von größer als 0,1 µm, vorzugsweise von 0,2 bis 20,0 µm, insbesondere von 0,3 bis 10,0 µm, enthält.

6. Folie nach einem oder mehreren der Ansprüche 1 bis 5, **dadurch gekennzeichnet, daß** sie dreischichtig aufgebaut ist und eine Basisschicht B, eine Deckschicht A und eine Deckschicht C enthält. Oder daß sie vierschichtig aufgebaut ist und eine Deckschicht C, eine darauf angeordnete Basisschicht B, eine darauf angeordnete Zwischenschicht Z und eine darauf angeordnete Deckschicht A enthält.

7. Folie nach einem oder mehreren der Ansprüche 1 bis 6, **dadurch gekennzeichnet, daß** mindestens eine der Deckschichten pigmentiert ist.

8. Folie nach einem oder mehreren der Ansprüche 1 bis 7, **dadurch gekennzeichnet, daß** sie auf mindestens einer Seite mit einer elektrischen Coronaentladung behandelt ist.

9. Folie nach einem oder mehreren der Ansprüche 1 bis 8, **dadurch gekennzeichnet, daß** sie auf mindestens einer Seite in-line beschichtet ist.

10. Folie nach einem oder mehreren der Ansprüche 1 bis 10, **dadurch gekennzeichnet, daß** sie auf der Deckschicht A metallisiert oder keramisch beschichtet ist.

11. Verfahren zur Herstellung der Folie nach Anspruch 1, umfassend die Schritte
- Herstellen einer mehrschichtigen Folie aus Basis- und Deckschicht(en) durch Coextrusion,
- biaxiales Strecken der Folie und
- Thermofixieren der gestreckten Folie,
**dadurch gekennzeichnet, daß** das Strecken der Folie in Längsrichtung bei einer Temperatur im Bereich von 80 bis 130 °C und die Querstreckung im Bereich von 90 bis 150 °C durchgeführt wird und daß das Längsstreckverhältnis im Bereich von 2,5:1 bis 6:1, vorzugsweise von 3:1 bis 5,5:1, und das Querstreckverhältnis im Bereich von 3,0:1 bis 5,0:1, vorzugsweise von 3,5:1 bis 4,5:1 liegt.

12. Verfahren nach Anspruch 11, **dadurch gekennzeichnet, daß** die gestreckte Folie zur Thermofixierung über eine Zeitdauer von etwa 0,1 bis 10,0 Sekunden bei einer Temperatur von 150 bis 250 °C gehalten wird.

13. Verfahren nach Anspruch 11 oder 12, **dadurch gekennzeichnet, daß** Verschnittmaterial, das bei der Folienherstellung anfällt, als Regenerat in einer Menge von bis zu 60 Gew.-%, bevorzugt 10 bis 50 Gew.-%, jeweils bezogen auf das Gesamtgewicht der Folie, wieder für die Folienherstellung verwendet wird.

14. Verwendung der Folie nach einem oder mehreren der Ansprüche 1 bis 10 für Verpackungszwecke.

15. Verwendung nach Anspruch 14 zum Verpacken von Nahrungs- und Genußmitteln.
